# EUROPÄISCHE PATENTSCHRIFT

(11) **EP 1 067 018 B1**
(45) Veröffentlichungstag und Bekanntmachung des Hinweises auf die Patenterteilung: **19.03.2008**
(21) Anmeldenummer: 00112923.8
(22) Anmeldetag: 20.06.2000
(51) Int. Cl.: B60Q 1/14

(54) **Lenkstockschalter**
Steering column switch
Interrupteur de colonne de direction

(30) Priorität: 09.07.1999 DE 19931994
(43) Veröffentlichungstag der Anmeldung: 10.01.2001
(73) Patentinhaber: Delphi Technologies Inc., Troy, MI 48007 (US)
(72) Erfinder: Besier, Holger, 65375 Oestrich-Winkel (DE)
(74) Vertreter: Becker, Bernd

(56) Entgegenhaltungen:
- US-A- 5 744 769

## Beschreibung

Die Erfindung bezieht sich auf einen Lenkstockschalter mit einem am Mantelrohr einer Lenksäule eines Kraftfahrzeuges festgelegten Träger für einzelne Schalter und einem Gehäuse.

Lenkstockschalter sind üblicherweise radial zur Lenksäule an deren Mantelrohr angebracht, wodurch bei Betätigung des Lenkrades und damit der im Mantelrohr geführten Lenksäule der Lenkstockschalter gegenüber dem Lenkrad unbeweglich ist. Die Lenkstockschalter umfassen in der Regel jeweils einen Blinkerschalter, einen Fahrtlichtschalter, der als Drehschalter in dem Schalthebel des Blinkerschalters integriert ist, und einen Wischerschalter für die stufenweise Betätigung der Scheibenwischer und für die Schaltfunktionen der Scheibenwaschanlage. Solche Lenkstockschalter sind beispielsweise aus der DE-AS 28 10 790 und der DE 35 32 532 C2 bekannt. Ein gattungsgemässer Lenkstockschalter ist gemäss dem Oberbegriff des Anspruchs 1 aus US 5744769 bekannt. Jeder Lenkstockschalter besitzt eine Vielzahl von miteinander in Wirkverbindung stehenden Bauteilen, die eine große Anzahl von Schaltfunktionen realisieren. Die einzelnen Bauteile werden in Abhängigkeit vom Fahrzeugtyp mehr oder weniger vormontiert und anschließend an einen am Mantelrohr der Lenksäule angeordneten Träger montiert.

Der Träger dient somit zur Halterung der verschiedenen Einzelschalter des Lenkstockschalters und muß daher eine relativ hohe Festigkeit aufweisen. Deshalb werden zur Fertigung des Trägers mit Glasfasern oder ähnlichem verstärkte Kunststoffe verwendet. Durch die Ausrichtung der Glasfasern in der erstarrten Kunststoffschmelze sind diese an der Oberfläche des Trägers erkennbar, was aus Design-Gründen als störend empfunden wird. Um die am Träger montierten Einzelschalter vor Umgebungseinflüssen und somit vor Beschädigung zu schützen, ist dem Träger ein Gehäuse zugeordnet, das aus Stabilitätsgründen ebenfalls aus einem verstärkten Kunststoff gefertigt ist. Zur Anpassung des Lenkstockschalters an das Fahrzeuginnere bzw. zur Erzielung einer gefälligen Optik, wird auf dem Träger und dem Gehäuse ein Außengehäuse als sogenannte Design-Umhüllung montiert, Das Außengehäuse ist aus Gründen der Montage und der Fertigung von dem Träger und dem Gehäuse beabstandet, wodurch der Lenkstockschalter einen entsprechend größeren Platzbedarf benötigt.

Es ist Aufgabe der Erfindung, einen Lenkstockschalter der eingangs genannten Art zu schaffen, der bei einem optimierten Platzbedarf die einzelnen Schalter aufnimmt, kostengünstig zu fertigen und optisch ansprechend gestaltet ist.

Erfindungsgemäß wird die Aufgabe dadurch gelöst, daß mindestens die sichtbaren Wandabschnitte des Gehäuses und mindestens die sichtbaren Wandabschnitte des Trägers jeweils aus einem Kern und einer Hülle bestehen, die einstückig miteinander verbunden sind.

Durch diese Maßnahmen entfällt die Montage einer zusätzlichen Design-Umhüllung bzw. eines zusätzlichen Außengehäuses für den Träger und für das Gehäuse. Bei einem vorgegebenen Platzangebot für den Lenkstockschalter weist dieser einen relativ großen Innenraum zur Aufnahme von zugeordneten Schaltern auf, da durch die einstückige Verbindung des jeweiligen Kerns und der Hülle der sichtbaren Wandabschnitte der Gehäuses und des Trägers jeglicher Freiraum dazwischen entfällt.

Die Stabilitätsanforderungen an den Kern sind wesentlich höher als die an die Hülle. Deshalb besteht bevorzugt der Kern aus einem Kunststoff mit relativ hoher Festigkeit und die Hülle aus einem Kunststoff mit relativ niedriger Festigkeit. Somit ist der Kern beispielsweise aus einem glasfaserverstärkten Kunststoff gefertigt, dessen Oberfläche relativ rauh und von einer minderen Güte ist, und die Hülle besteht aus einem ungefüllten Kunststoff mit einer gegenüber dem Kern erhöhten Oberflächengüte. Kunststoffe, die zur Fertigung dekorativer Sichtflächen verwendet werden, weisen meist eine relativ geringe Festigkeit auf. Ferner können dem Werkstoff des Kerns selbstverständlich weitere bekannte Füllstoffe beigemischt werden, die gegebenenfalls dessen elektrische Eigenschaften verändern. Um das Erscheinungsbild der Hülle beispielsweise an die Oberflächenbeschaffenheit benachbarter Bauteile des Lenkstockschalters anzupassen oder benachbarte Bauteile an der Hülle zu befestigen, besteht vorteilhafterweise die Hülle aus einem Kunststoff mit anforderungsgerechten Eigenschaften.

Zweckmäßigerweise ist der Kern mit der Hülle im Zweikomponenten-Spritzgußverfahren hergestellt. Sonach können die unterschiedlichen Materialien mit einem Fertigungsverfahren kostengünstig und in hoher Qualität zu einem Teil verarbeitet werden.

Da an die Hülle primär Anforderungen hinsichtlich des Designs des Lenkstockschalters und sekundär Anforderungen hinsichtlich der mechanischen und/oder elektrischen Eigenschaften gestellt werden, weist nach einer Weiterbildung der Erfindung die Hülle eine geringere Wandstärke als der Kern auf. Demzufolge ist die Hülle anforderungsgerecht in einem relativ kurzen Spritzzyklus mit einem relativ geringen Materialeinsatz zu fertigen.

Zur optischen Anpassung des Lenkstockschalters an andere in einem Kraftfahrzeuginnenraum installierte Komponenten, ist bevorzugt die Hülle mit einer Oberflächenstruktur versehen.

Nach einer vorteilhaften Ausgestaltung des Erfindungsgedankens sind in die Hülle und den Kern des jeweiligen Wandabschnittes des Gehäuses Durchbrüche für die Betätigungselemente der einzelnen Schalter eingelassen. Zweckmäßigerweise übergreift die Hülle mindestens teilweise die Wand des Durchbruchs des Kerns. Alternativ steht die Hülle geringfügig über die Wand des Durchbruchs des Kerns hervor. Aufgrund dieser Maßnahmen sind Einbauöffnungen für die Betätigungselemente geschaffen, an deren Stoßkanten der Kern überdeckt ist. Dies stellt ein einheitliches Erscheinungsbild des Lenkstockschalters sicher.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

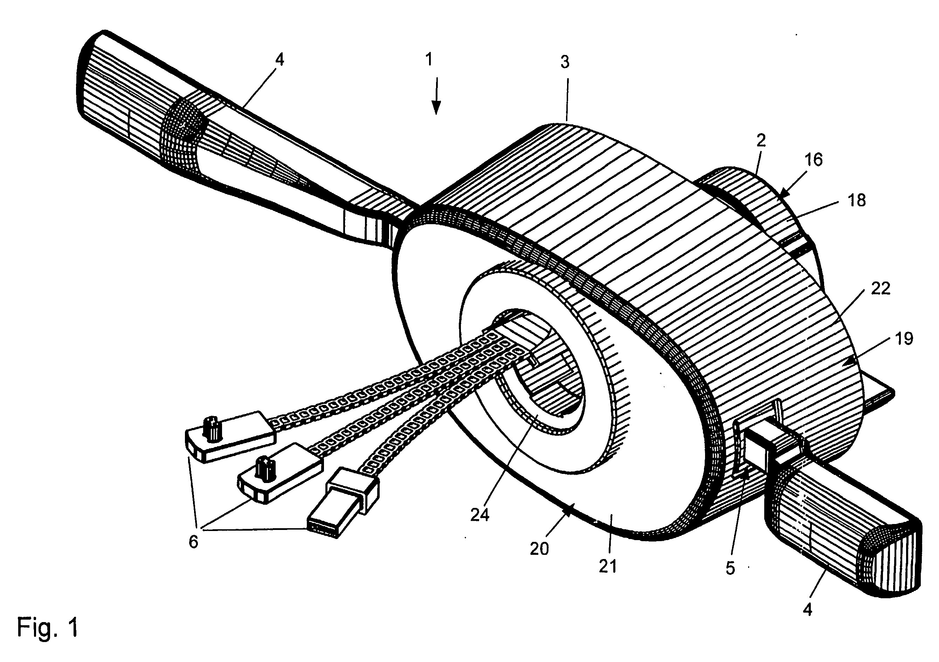

- Fig.1: eine perspektivische Ansicht eines erfindungsgemäßen Lenkstockschalters,

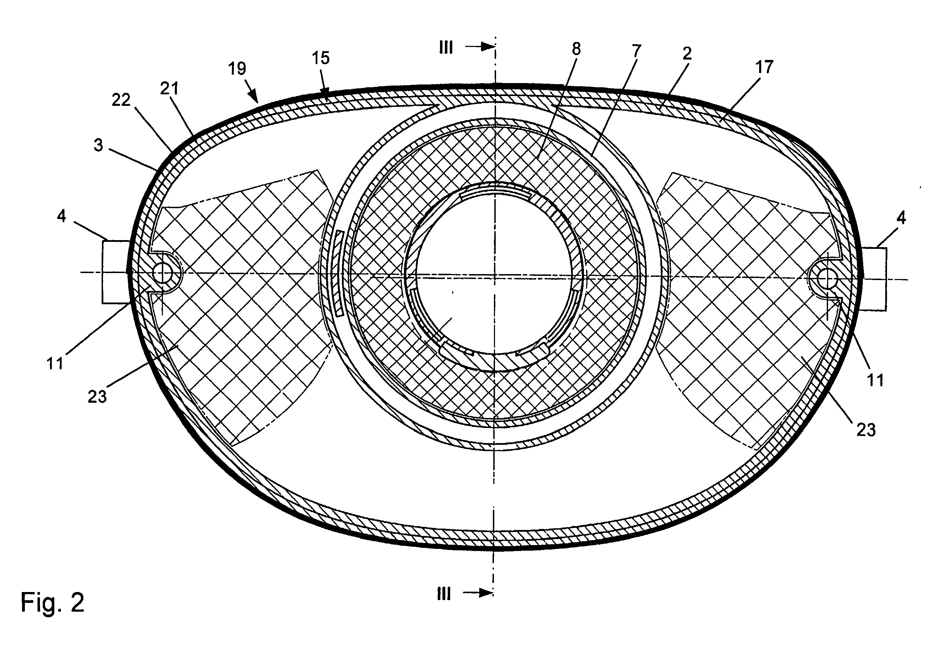

- Fig.2: einen Schnitt durch den Lenkstockschalter nach Fig. 1 und

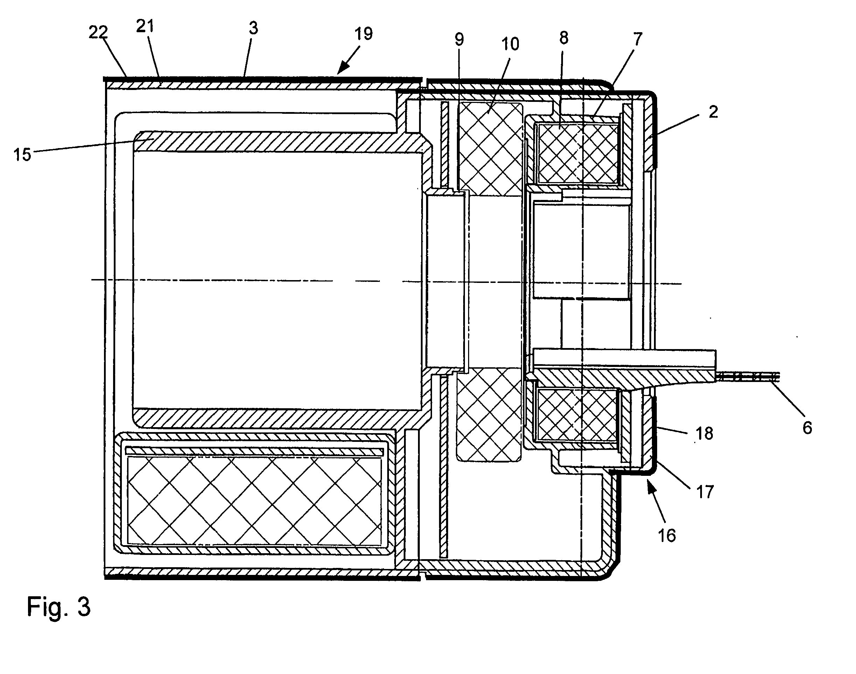

- Fig.3: einen Schnitt durch die Darstellung nach Fig. 2 gemäß Linie III-III.

Der Lenkstockschalter 1 umfaßt einen Träger 2 sowie ein Gehäuse 3 zur Aufnahme von einzelnen Schaltern 23 mit Betätigungselementen 4, die entsprechende Durchbrüche 5 durchragen. An der einem Lenkrad zugewandten Seite ist das Gehäuse 3 mit einer Öffnung 24 versehen, durch die Flachbandleitungen 6 zur Kontaktierung eines Airbagmoduls geführt sind.

Der zumindest teilweise in das Gehäuse 3 eingesetzte Träger 2 weist eine Aufnahme 7 für eine Wickelfeder 8 zur Übertragung elektrischer Funktionen in das Lenkrad sowie eine Halterung 9 für einen Winkelsensor 10 auf. Im weiteren sind Befestigungen 11 für die als Blinker- und/oder Wischer-/Wascher und/oder Lichtschalter ausgebildete Schalter 23 ausgeformt. Ferner ist ein Abschnitt 12 zur Aufnahme eines Elektronikmoduls 13 für die Funktionen eines Zündanlaßschalters vorgesehen. Darüberhinaus ist an den Träger 2 eine Befestigungsvorrichtung 14 angeformt, die zur Festlegung des Lenkstockschalters 1 an einem Mantelrohr des Kraftfahrzeuges dient.

Da der Träger 2 zumindest teilweise in das Gehäuse 3 eingesetzt ist, sind einige seiner Wandabschnitte 15 von außen nicht sichtbar, während andere Wandabschnitte 16 über das Gehäuse 3 vorstehen und sind somit sichtbar sind. Die nicht sichtbaren Wandabschnitte 15 sowie die sichtbaren Wandabschnitte 16 bestehen aus einem gemeinsamen Kern 17, der im Bereich der sichtbaren Wandabschnitte von einer Hülle 18 umgeben ist.

Das Gehäuse 3 umfaßt gleichfalls von außen sichtbare Wandabschnitte 19 und nicht sichtbare Wandabschnitte 20, die ebenfalls einen gemeinsamen Kern 21 aufweisen, der in Bereich der sichtbaren Wandabschnitte 19 von einer Hülle 22 umgeben ist.

Der Kern 17, 21 ist derart gestaltet und aus einem derartigen Material hergestellt, daß er technische Anforderungen hinsichtlich der Stabilität und der elektrischen Eigenschaften erfüllt. Die Hülle 18, 22 dahingegen erfüllt vorwiegend Anforderungen an das Design des Lenkstockschalters 1. So ist die Hülle 18, 22 entsprechend den Anforderungen farblich gestaltet und von einer gewünschten Oberflächenbeschaffenheit. Der Kern 17, 21 und die Hülle 18, 22 sowohl des Trägers 2 als auch des Gehäuses 3 werden in einem Zweikomponenten-Spritzgußverfahren gemeinsam gefertigt und sind somit einstückig miteinander verbunden. Zur Reduzierung der Zykluszeit des Zweikomponenten-Spritzgußverfahrens weist die Hülle 18, 22 eine geringere Wanddicke als der Kern 17, 21 auf.

## Patentansprüche

1. Lenkstockschalter mit einem am Mantelrohr einer Lenksäule eines Kraftfahrzeuges festgelegten Träger (2) für einzelne Schalter (23) und einem Gehäuse (3), **dadurch gekennzeichnet, daß** mindestens die sichtbaren Wandabschnitte (19) des Gehäuses (3) und mindestens die sichtbaren Wandabschnitte (16) des Trägers (2) jeweils aus einem Kern (17, 21) und einer Hülle (18, 22) bestehen, die einstückig miteinander verbunden sind.

2. Lenkstockschalter nach Anspruch 1, **dadurch gekennzeichnet, daß** der Kern (17, 21) aus einem Kunststoff mit relativ hoher Festigkeit und die Hülle (18, 22) aus einem Kunststoff mit relativ niedriger Festigkeit besteht.

3. Lenkstockschalter nach Anspruch 1, **dadurch gekennzeichnet, daß** die Hülle (18, 22) aus einem Kunststoff mit anforderungsgerechten Eigenschaften besteht.

4. Lenkstockschalter nach einem der Ansprüche 1 bis 3, **dadurch gekennzeichnet, daß** der Kern (17, 21) mit der Hülle (18, 22) im Zweikomponenten-Spritz-gußverfahren hergestellt ist.

5. Lenkstockschalter nach einem der Ansprüche 1 bis 4, **dadurch gekennzeichnet, daß** die Hülle (18, 22) eine geringere Wandstärke als der Kern (17, 21) aufweist

6. Lenkstockschalter nach einem der Ansprüche 1 bis 5, **dadurch gekennzeichnet, daß** die Hülle (18, 22) mit einer Oberflächenstruktur versehen ist.

7. Lenkstockschalter nach einem der Ansprüche 1 bis 6, **dadurch gekennzeichnet, daß** in die Hülle (22) und den Kern (21) des jeweiligen Wandabschnittes (19) des Gehäuses (3) Durchbrüche (5) für die Betätigungselemente (4) der einzelnen Schalter (23) eingelassen sind.

8. Lenkstockschalter nach Anspruch 7, **dadurch gekennzeichnet, daß** die Hülle (22) mindestens teilweise die Wand (19) des jeweiligen Durchbruchs (5) des Kerns (21) übergreift.

9. Lenkstockschalter nach Anspruch 7, **dadurch g**e**kennzeichnet, daß** die Hülle (22) geringfügig über die Wand (19) des jeweiligen Durchbruchs (5) des Kerns (21) hervorsteht.

## Claims

1. Steering column switch having a support (2) for individual switches (23) fixed to the outer column of a steering column of a motor vehicle and a housing (3), **characterised in that** at least the visible wall sections (19) of the housing (3) and at least the visible wall sections (16) of the support (2) consist in each case of a core (17, 21) and a shell (18, 22), which are integrally connected to one another.

2. Steering column switch according to claim 1, **characterised in that** the core (17, 21) consists of a plastic having relatively high strength and the shell (18, 22) consists of a plastic having relatively low strength.

3. Steering column switch according to claim 1, **characterised in that** the shell (18, 22) consists of a plastic having properties according to requirements.

4. Steering column switch according to one of claims 1 to 3, **characterised in that** the core (17, 21) is produced with the shell (18, 22) by the two-component injection-moulding process.

5. Steering column switch according to one of claims 1 to 4, **characterised in that** the shell (18, 22) has a lower wall thickness than the core (17, 21).

6. Steering column switch according to one of claims 1 to 5, **characterised in that** the shell (18, 22) is provided with a surface structure.

7. Steering column switch according to one of claims 1 to 6, **characterised in that** openings (5) for the actuating elements (4) of the individual switches (23) are admitted to the shell (22) and the core (21) of the particular wall section (19) of the housing (3).

8. Steering column switch according to claim 7, **characterised in that** the shell (22) engages at least partly over the wall (19) of the particular opening (5) of the core (21).

9. Steering column switch according to claim 7, **characterised in that** the shell (22) projects slightly beyond the wall (19) of the particular opening (5) of the core (21).

## Revendications

1. Commutateur de colonne de direction avec un support (2) pour des commutateurs individuels (23) assujetti au tube-corps d'une colonne de direction et avec un boîtier (3), **caractérisé en ce qu'**au moins les parties de paroi visibles (19) du boîtier (3) et au moins les parties de paroi visibles (16) du support (2) sont chacune constituées d'un noyau (17, 21) et d'un manchon (18, 22) qui sont reliés entre eux d'un seul tenant.

2. Commutateur de colonne de direction selon la revendication 1, **caractérisé en ce que** le noyau (17, 21) est constitué d'une matière plastique à résistance mécanique relativement élevée, et le manchon (18, 22) est constitué d'une matière plastique à résistance mécanique relativement réduite.

3. Commutateur de colonne de direction selon la revendication 1, **caractérisé en ce que** le manchon (18, 22) est constitué d'une matière plastique dont les propriétés sont conformes aux exigences rencontrées.

4. Commutateur de colonne de direction selon une des revendications 1 à 3, **caractérisé en ce que** le noyau (17, 21) est réalisé avec le manchon (18, 22) par un procédé de moulage par injection à deux composants.

5. Commutateur de colonne de direction selon une des revendications 1 à 4, **caractérisé en ce que** le manchon (18, 22) présente une épaisseur de paroi inférieure à celle du noyau (17, 21).

6. Commutateur de colonne de direction selon une des revendications 1 à 5, **caractérisé en ce que** le manchon (18, 22) est pourvu d'une structure superficielle.

7. Commutateur de colonne de direction selon une des revendications 1 à 6, **caractérisé en ce que** des passages (5) pour les éléments d'actionnement (4) des commutateurs individuels (23) sont ménagés dans le manchon (22) et dans le noyau (21) de chaque partie de paroi (19) du boîtier (3).

8. Commutateur de colonne de direction selon la revendication 7, **caractérisé en ce que** le manchon (22) entoure au moins partiellement la paroi (19) de chaque passage (5) du noyau (21).

9. Commutateur de colonne de direction selon la revendication 7, **caractérisé en ce que** le manchon (22) fait légèrement saillie sur la paroi (19) de chaque passage (5) du noyau (21).
